# EUROPEAN PATENT APPLICATION

(11) **EP 4 574 629 A1**
(43) Date of publication of application: **25.06.2025**
(21) Application number: 24221636.4
(22) Date of filing: 19.12.2024
(51) Int. Cl.: B62D 21/15, B62D 25/02

(54) **VEHICLE LOWER BODY STRUCTURE**

(30) Priority: 22.12.2023 JP 2023217308
(71) Applicant: TOYOTA JIDOSHA KABUSHIKI KAISHA, Aichi-ken, 471-8571 (JP)
(72) Inventor: MAEDA, Hirokazu, TOYOTA-SHI, AICHI-KEN, 471-8571 (JP); HIRAKAWA, Katsuichiro, TOYOTA-SHI, AICHI-KEN, 471-8571 (JP); MIYATAKE, Junya, TOYOTA-SHI, AICHI-KEN, 471-8571 (JP); NISHIKAWA, Yuki, TOYOTA-SHI, AICHI-KEN, 471-8571 (JP); SHIRAI, Yasuhiro, TOYOTA-SHI, AICHI-KEN, 471-8571 (JP)
(74) Representative: Cabinet Beau de Loménie

(57) **Abstract**

A vehicle lower body structure, including a rocker configuring a part of a vehicle lower side of a vehicle side portion, the rocker disposed along a vehicle front-rear direction; and a reinforcement including a body portion provided inside the rocker and a projecting portion that projects in a vehicle up-down direction from the body portion and that is joined to a wall surface of the rocker positioned on a projecting direction side of the projecting portion.

## Description

### BACKGROUND

### Technical Field

The present disclosure relates to a vehicle lower body structure.

### Related Art

Japanese Patent Application Laid-open (JP-A) No. 2018-188086 discloses an invention relating to a vehicle body lower portion structure. In this vehicle body lower portion structure, a box-shaped bulkhead is provided inside a rocker.

### SUMMARY

In this connection, if the rigidity of the rocker with respect to loads in the vehicle up-down direction is small, the cross-section of the rocker may deform so as to expand and contract in the vehicle up-down direction while the vehicle is moving, resulting in the propagation of road noise to the occupant and a reduction in the ride quality of the vehicle.

In this regard, in JP-A No. 2018-188086, since the rocker and the bulkhead are not directly joined to each other, the bulkhead does not contribute to ensuring the rigidity of the rocker.

Furthermore, although the vehicle upper side and the vehicle lower side of the rocker are interconnected by a tabular stiffener, there is room for improvement in terms of ensuring the rigidity of the rocker with respect to loads in the vehicle up-down direction.

In consideration of the above-described circumstances, the present disclosure obtains a vehicle lower body structure that can improve the ride quality of a vehicle.

A vehicle lower body structure pertaining to a first aspect includes: a rocker configuring a part of a vehicle lower side of a vehicle side portion, the rocker disposed along a vehicle front-rear direction; and a reinforcement including a body portion provided inside the rocker and a projecting portion that projects in a vehicle up-down direction from the body portion and that is joined to a wall surface of the rocker positioned on a projecting direction side of the projecting portion.

According to the vehicle lower body structure pertaining to the first aspect, a part of the vehicle lower side of the vehicle side portion is configured by the rocker, and the rocker is disposed along the vehicle front-rear direction.

If the rigidity of the rocker with respect to loads in the vehicle up-down direction is small, the cross-section of the rocker may deform so as to expand and contract in the vehicle up-down direction while the vehicle is moving, resulting in the propagation of road noise to the occupant and a reduction in the ride quality of the vehicle.

In the present aspect, the rocker is reinforced by the reinforcement that includes the body portion and the projecting portion. Specifically, the body portion is provided inside the rocker, and the projecting portion projects in the vehicle up-down direction from the body portion and is joined to the wall surface of the rocker that is positioned on the projecting direction side of the projecting portion.

When loads in the vehicle up-down direction are input to the rocker while the vehicle is moving for example and the cross-section of the rocker tries to deform so as to expand and contract in the vehicle up-down direction, the projecting portion and the body portion resist the deformation of the rocker, with the result that the rocker is less likely to be deformed by the loads. That is, in the present aspect, the rigidity of the rocker with respect to loads in the vehicle up-down direction can be improved by the reinforcement.

A vehicle lower body structure pertaining to a second aspect is the vehicle lower body structure pertaining to the first aspect, and the body portion is configured such that an inside of the body portion is an impact absorber that is divided in a vehicle width direction, a first projecting portion configuring the projecting portion projects in a vehicle upward direction from the impact absorber and the first projecting portion is joined to a vehicle upper part of the rocker, and a second projecting portion configuring the projecting portion projects in a vehicle downward direction from the impact absorber and the second projecting portion is joined to a vehicle lower part of the rocker.

The vehicle lower body structure pertaining to the second aspect includes the impact absorber whose inside is divided in the vehicle width direction, and in the impact absorber plural spaces are formed in the vehicle width direction. When an impact load in the vehicle width direction is input, the parts of the impact absorber around the spaces become crushed and can thereby absorb the impact energy.

Furthermore, in the present aspect, the first projecting portion projects in the vehicle upward direction from the impact absorber and is joined to the vehicle upper part of the rocker, and the second projecting portion projects in the vehicle downward direction from the impact absorber and is joined to the vehicle lower part of the rocker. The rigidity of the rocker with respect to loads in the vehicle up-down direction can be further improved.

A vehicle lower body structure pertaining to a third aspect is the vehicle lower body structure pertaining to the second aspect, and the first projecting portion and the second projecting portion are disposed as a set as viewed in the vehicle up-down direction, and the first projecting portion and the second projecting portion are disposed on a same side in the vehicle width direction relative to a vehicle width direction center position of the rocker.

According to the vehicle lower body structure pertaining to the third aspect, the first projecting portion and the second projecting portion are disposed as a set as viewed in the vehicle up-down direction. Additionally, the first projecting portion and the second projecting portion are disposed on the same side in the vehicle width direction relative to the vehicle width direction center position of the rocker.

Loads received by the first projecting portion from the vehicle upper part of the rocker can be supported by the second projecting portion, and loads received by the second projecting portion from the vehicle lower part of the rocker can be supported by the first projecting portion. As a result, compared for example with a configuration where the projecting portions are not disposed as a set as viewed in the vehicle up-down direction, the rigidity of the rocker with respect to loads in the vehicle up-down direction can be improved.

A vehicle lower body structure pertaining to a fourth aspect is the vehicle lower body structure pertaining to any one of the first aspect to the third aspect, and the body portion is joined to an outer part and an inner part, in the vehicle width direction, of the rocker.

According to the vehicle lower body structure pertaining to the fourth aspect, the body portion is joined to the outer part and the inner part, in the vehicle width direction, of the rocker, and expansion and contraction of the rocker in the vehicle width direction are restrained by the body portion. The rigidity of the rocker with respect to loads in the vehicle up-down direction can be further improved.

A vehicle lower body structure pertaining to a fifth aspect is the vehicle lower body structure pertaining to any one of the first aspect to the fourth aspect, and the reinforcement further includes a shared panel that is provided inside the rocker, that extends in the vehicle up-down direction, and that interconnects a vehicle upper part and a vehicle lower part of the rocker.

According to the vehicle lower body structure pertaining to the fifth aspect, the reinforcement includes the shared panel provided inside the rocker. The shared panel extends in the vehicle up-down direction, and the vehicle upper part and the vehicle lower part of the rocker are interconnected by the shared panel. Expansion and contraction of the rocker in the vehicle up-down direction are restrained by the shared panel, with the result that the rigidity of the rocker with respect to loads in the vehicle up-down direction can be further improved.

A vehicle lower body structure pertaining to a sixth aspect is the vehicle lower body structure pertaining to any one of the first aspect to the fifth aspect, and the projecting portion is formed integrally with at least one of a vehicle upper part or a vehicle lower part of the body portion.

According to the vehicle lower body structure pertaining to the sixth aspect, the projecting portion is formed integrally with at least one of the vehicle upper part or the vehicle lower part of the body portion. The number of parts configuring the vehicle can be reduced and the manufacturing process of the vehicle can be simplified.

A vehicle lower body structure pertaining to a seventh aspect is the vehicle lower body structure pertaining to the sixth aspect, and the projecting portion and a part of the body portion at which the projecting portion is provided are formed by the same sheet material.

According to the vehicle lower body structure pertaining to the seventh aspect, the body portion and the projecting portion can be integrally formed by bending a sheet material, with the result that the manufacturing process of the vehicle can be further simplified.

A vehicle lower body structure pertaining to an eighth aspect is the vehicle lower body structure pertaining to any one of the first aspect to the seventh aspect, and a joint surface of the projecting portion joined to the rocker and the part of the rocker joined to the joint surface are in parallel as viewed in the vehicle front-rear direction.

According to the vehicle lower body structure pertaining to the eighth aspect, the joint surface of the projecting portion joined to the rocker and the part of the rocker joined to the joint surface are in parallel as viewed in the vehicle front-rear direction, and the projecting portion and the rocker can be brought into planar contact with each other. When loads in the vehicle up-down direction are input, portions where stress concentrates can be inhibited from forming in the place where the rocker contacts the projecting portion, and the rigidity of the rocker with respect to loads in the vehicle up-down direction can be further improved.

As described above, the vehicle lower body structure pertaining to the present disclosure has the effect that it can improve the ride quality of a vehicle.

### BRIEF DESCRIPTION OF THE DRAWINGS

FIG. 1 is a cross-sectional view, as viewed from a vehicle front side, schematically showing configurations on a vehicle body lower portion side to which a vehicle lower body structure pertaining to a first embodiment has been applied (a cross-sectional view showing a state in which the vehicle body lower portion is cut along line 1-1 of FIG. 2);
FIG. 2 is a bottom view schematically showing configurations of the vehicle to which the vehicle lower body structure pertaining to the first embodiment has been applied;
FIG. 3 is a cross-sectional view, as viewed from the vehicle front side, schematically showing configurations on the vehicle body lower portion side to which a vehicle lower body structure pertaining to a second embodiment has been applied (a cross-sectional view corresponding to FIG. 1); and
FIG. 4 is cross-sectional view, as viewed from the vehicle front side, schematically showing configurations on the vehicle body lower portion side to which a vehicle lower body structure pertaining to a third embodiment has been applied (a cross-sectional view corresponding to FIG. 1).

### DETAILED DESCRIPTION

### <First Embodiment>

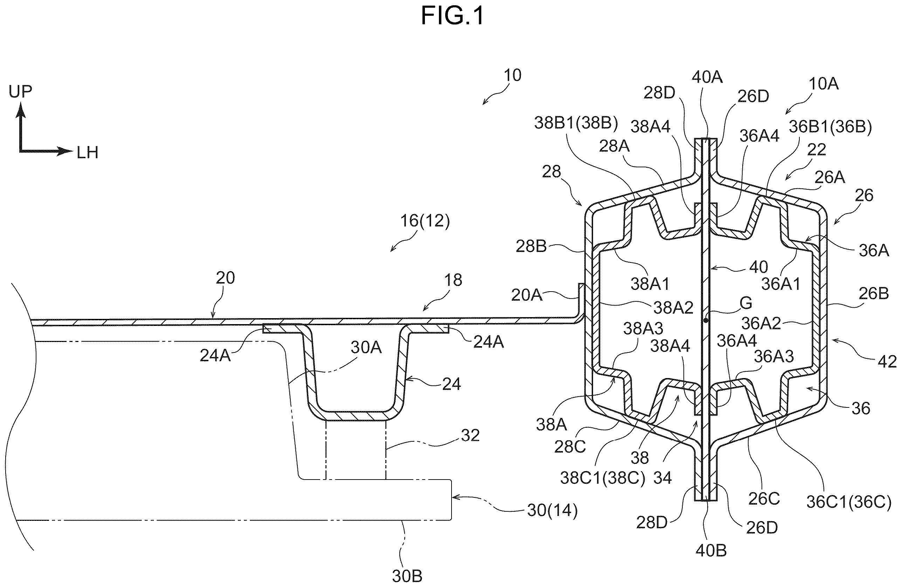

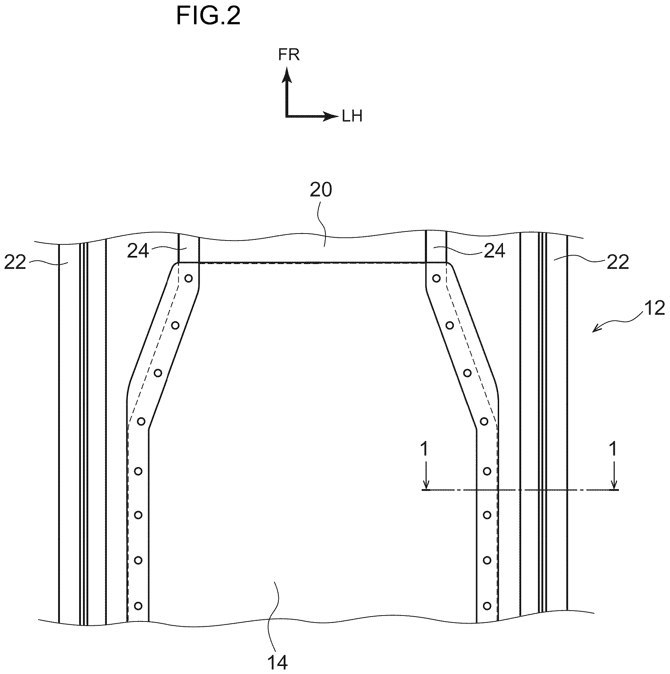

A first embodiment of the vehicle lower body structure pertaining to the present disclosure will be described below using FIG. 1 and FIG. 2. It will be noted that arrow FR shown where appropriate in the drawings indicates a vehicle forward direction, arrow UP indicates a vehicle upward direction, and arrow LH indicates a leftward direction in a vehicle width direction.

First, schematic configurations of a vehicle 10 to which the vehicle lower body structure pertaining to the present embodiment has been applied will be described. It will be noted that in the present embodiment the vehicle 10 basically has a bilaterally symmetrical configuration, so mainly configurations of the vehicle width direction left part of the vehicle 10 will be described below, and description of the vehicle width direction right part will be omitted as appropriate.

The vehicle 10 is configured to include a vehicle body 12, a power unit such as a motor (not shown in the drawings) installed in the vehicle 10, and a battery pack 14 attached to the vehicle body 12. The power unit is driven upon receiving a supply of power from the battery pack 14, and the vehicle 10 travels on driving power generated by the power unit.

The vehicle body 12 includes a cabin 16, and the vehicle lower part of the cabin 16 is configured by a floor portion 18. The floor portion 18 is configured to include a floor panel 20, rockers 22, and side members 24.

Specifically, the floor panel 20 is formed by stamping a steel sheet and extends in the vehicle front-rear direction and the vehicle width direction as viewed in the vehicle up-down direction. A left-right pair of the rockers 22 are disposed along the vehicle front-rear direction at outer edge portions, in the vehicle width direction, of the floor panel 20. It will be noted that the rockers 22 configure a part of a vehicle lower side of a vehicle side portion 10A.

The rockers 22 are made of steel, extend in the vehicle front-rear direction, and are each configured to include a rocker outer panel 26 that configures the vehicle width direction outer part thereof and a rocker inner panel 28 that configures the vehicle width direction inner part thereof.

Specifically, the rocker outer panel 26 includes an upper wall portion 26A that configures the vehicle upper part thereof, a side wall portion 26B that configures the vehicle width direction outer part thereof, a lower wall portion 26C that configures the vehicle lower part thereof, and a pair of flange portions 26D. Furthermore, the cross-sectional shape of the rocker outer panel 26 as viewed in the vehicle front-rear direction is configured in the shape of a hat that opens inward in the vehicle width direction.

The rocker inner panel 28 includes an upper wall portion 28A that configures the vehicle upper part thereof, a side wall portion 28B that configures the vehicle width direction inner part thereof, a lower wall portion 28C that configures the vehicle lower part thereof, and a pair of flange portions 28D. Furthermore, the cross-sectional shape of the rocker inner panel 28 as viewed in the vehicle front-rear direction is configured in the shape of a hat that opens outward in the vehicle width direction. It will be noted that a vehicle width direction outer end portion 20A of the floor panel 20 is joined to the side wall portion 28B by joints (not shown in the drawings) formed by welding or the like.

The flange portions 26D of the rocker outer panel 26 and the flange portions 28D of the rocker inner panel 28 are joined to each other by joints (not shown in the drawings) formed by welding or the like, so that the rocker 22 has a closed cross-sectional structure whose cross-sectional shape as viewed in the vehicle front-rear direction is a substantially hexagonal closed cross-section.

The side members 24 are made of steel, extend in the vehicle front-rear direction, and are disposed on both sides, in the vehicle width direction, of the floor panel 20 on the vehicle lower side of the floor panel 20. It will be noted that the side members 24 are positioned inward in the vehicle width direction relative to the rockers 22.

The cross-sectional shape of each of the side members 24 as viewed in the vehicle front-rear direction is configured in the shape of a hat that opens in the upward direction, and flange portions 24A thereof are joined to the floor panel 20 by joints (not shown in the drawings) formed by welding or the like. Furthermore, the side members 24 configure with the floor panel 20 closed cross-sectional structural units as a result of being joined to the floor panel 20. In the present embodiment, the battery pack 14 is attached to the side members 24.

The battery pack 14 includes a battery case 30 whose main part is configured by an aluminum alloy and a battery module (not shown in the drawings) disposed inside the battery case 30.

The battery case 30 includes a body portion 30A that houses the battery module and a base portion 30B that configures the vehicle lower part of the battery case 30. The battery case 30 is secured to the vehicle body 12 as a result of the base portion 30B being attached by attachment members (not shown the drawings) to the side members 24 in a state in which the main part of the body portion 30A is housed between the side members 24 and a state in which mount members 32 are interposed between the base portion 30B and the side members 24. It will be noted that the height position of a part of the battery pack 14 overlaps the rockers 22 as viewed in the vehicle width direction.

In the present embodiment, the vehicle lower body structure has a characteristic in that the rockers 22 are reinforced by reinforcements 34 provided inside the rockers 22. The configuration of the reinforcements 34 will be described in detail below.

The reinforcements 34 are each configured to include an outer reinforcement member 36 made of steel, an inner reinforcement member 38 made of steel, and a shared panel 40 made of steel. The outer reinforcement member 36 is formed by stamping a single steel sheet, extends in the vehicle front-rear direction, and is configured to include a base 36A that configures the main part thereof, a first projecting portion 36B configuring a projecting portion, and a second projecting portion 36C configuring a projecting portion.

The base 36A is configured to include an upper wall 36A1 that configures the vehicle upper part thereof, a side wall 36A2 that configures the vehicle width direction outer part thereof, a lower wall 36A3 that configures the vehicle lower part thereof, and a pair of flanges 36A4. Namely, the cross-sectional shape of the base 36A as viewed in the vehicle front-rear direction is configured in the shape of a hat that opens inward in the vehicle width direction. The side wall 36A2 is joined to the side wall portion 26B of the rocker outer panel 26 by joints (not shown in the drawings) formed by welding or the like.

The first projecting portion 36B is formed in the vehicle width direction central portion of the upper wall 36A1, extends in the vehicle front-rear direction, projects in the upward direction from the upper wall 36A1 as viewed in the vehicle front-rear direction, and is configured in the shape of a U that opens in the downward direction.

Furthermore, an upper surface 36B1 of the first projecting portion 36B is configured as a joint surface joined to the upper wall portion 26A of the rocker outer panel 26 and is in parallel to the upper wall portion 26A as viewed in the vehicle front-rear direction. The upper surface 36B1 and the wall surface of the upper wall portion 26A of the rocker outer panel 26 are joined to each other by joints (not shown in the drawings) formed by friction stir welding or the like.

The second projecting portion 36C is formed in the vehicle width direction central portion of the lower wall 36A3, extends in the vehicle front-rear direction, projects in the downward direction from the lower wall portion 36A3 as viewed in the vehicle front-rear direction, and is configured in the shape of a U that opens in the upward direction.

Furthermore, a lower surface 36C1 of the second projecting portion 36C is configured as a joint surface joined to the lower wall portion 26C of the rocker outer panel 26 and is in parallel to the lower wall portion 26C as viewed in the vehicle front-rear direction. The lower surface 36C1 and the wall surface of the lower wall portion 26C of the rocker outer panel 26 are joined to each other by joints (not shown in the drawings) formed by friction stir welding or the like.

It will be noted that the first projecting portion 36B and the second projecting portion 36C are disposed as a set so as to overlap each other as viewed in the vehicle up-down direction and are positioned outward in the vehicle width direction relative to a center, in the vehicle width direction, of the rocker 22, more specifically, relative to a center of gravity G of the cross-section of the rocker 22 as viewed in the vehicle front-rear direction.

The inner reinforcement member 38 is formed by stamping a single steel sheet, extends in the vehicle front-rear direction, and is configured to include a base portion 38A that configures the main part thereof, a first projecting portion 38B configuring a projecting portion, and a second projecting portion 38C configuring a projecting portion.

The base portion 38A is configured to include an upper wall 38A1 that configures the vehicle upper part thereof, a side wall 38A2 that configures the vehicle width direction inner part thereof, a lower wall 38A3 that configures the vehicle lower part thereof, and a pair of flanges 38A4. Namely, the cross-sectional shape of the base portion 38A as viewed in the vehicle front-rear direction is configured in the shape of a hat that opens outward in the vehicle width direction. The side wall 38A2 is joined to the side wall portion 28B of the rocker inner panel 28 by joints (not shown in the drawings) formed by welding or the like.

The first projecting portion 38B is formed in the vehicle width direction central portion of the upper wall 38A1, extends in the vehicle front-rear direction, projects in the upward direction from the upper wall 38A1 as viewed in the vehicle front-rear direction, and is configured in the shape of a U that opens in the vehicle downward direction.

Furthermore, an upper surface 38B1 of the first projecting portion 38B is configured as a joint surface joined to the upper wall portion 28A of the rocker inner panel 28 and is in parallel to the upper wall portion 28A as viewed in the vehicle front-rear direction. The upper surface 38B 1 and the upper wall portion 28A of the rocker inner panel 26 are joined to each other by joints (not shown in the drawings) formed by friction stir welding or the like.

The second projecting portion 38C is formed in the vehicle width direction central portion of the lower wall 38A3, extends in the vehicle front-rear direction, projects in the vehicle downward direction from the lower wall 38A3 as viewed in the vehicle front-rear direction, and is configured in the shape of a U that opens in the vehicle upward direction.

Furthermore, a lower surface 38C1 of the second projecting portion 38C is configured as a joint surface joined to the lower wall portion 28C of the rocker inner panel 28 and is in parallel to the lower wall portion 28C as viewed in the vehicle front-rear direction. The lower surface 38C1 and the lower wall portion 28C of the rocker inner panel 28 are joined to each other by joints (not shown in the drawings) formed by friction stir welding or the like.

Furthermore, the first projecting portion 38B and the second projecting portion 38C are disposed as a set so as to overlap each other as viewed in the vehicle up-down direction and are positioned inward in the vehicle width direction relative to the center of gravity G as viewed in the vehicle front-rear direction.

The shared panel 40 has a tabular shape extending in the vehicle up-down direction and the vehicle front-rear direction and interconnects in the vehicle up-down direction the vehicle upper part and the vehicle lower part of the rocker 22.

Specifically, an upper end portion 40A of the shared panel 40 is sandwiched between and joined by joints (not shown in the drawings) formed by welding or the like to the flange portion 26D of the rocker outer panel 26 and the flange portion 28D of the rocker inner panel 28.

Furthermore, the part of the shared panel 40 directly under the upper end portion 40A is sandwiched between and joined by joints (not shown in the drawings) formed by welding or the like to the flange 36A4 of the outer reinforcement member 36 and the flange 38A4 of the inner reinforcement member 38.

A lower end portion 40B of the shared panel 40 is sandwiched between and joined by joints (not shown in the drawings) formed by welding or the like to the flange 26D on the vehicle lower side of the rocker outer panel 26 and the flange 28D on the vehicle lower side of the rocker inner panel 28.

Furthermore, the part of the shared panel 40 directly above the lower end portion 40B is sandwiched between and joined by joints (not shown in the drawings) formed by welding or the like to the flange 36A4 on the vehicle lower side of the outer reinforcement member 36 and the flange 38A4 on the vehicle lower side of the inner reinforcement member 38.

Furthermore, hereinafter the aggregate of the base 36A of the outer reinforcement member 36, the base 38A of the inner reinforcement member 38, and the shared panel 40 will be called a body portion 42. The inside of the body portion 42 is divided in the vehicle width direction, whereby plural spaces extending in the vehicle front-rear direction are formed therein. These spaces serve as crushing margins of the base 36A and the base 38A when an impact load in the vehicle width direction is input, and the body portion 42 functions as an impact absorber.

### (Action and Effects of Present Embodiment)

The action and effects of the present embodiment will be described.

In the present embodiment, as shown in FIG. 1, a part of the vehicle lower side of the vehicle side portion 10A is configured by the rocker 22, and the rocker 22 is disposed along the vehicle front-rear direction.

In this connection, if the rigidity of the rocker 22 with respect to loads in the vehicle up-down direction is small, the cross-section of the rocker 22 may deform so as to expand and contract in the vehicle up-down direction while the vehicle 10 is moving, resulting in the propagation of road noise to the occupant and a reduction in the ride quality of the vehicle 10.

In the present embodiment, the rocker 22 is reinforced by the reinforcement 34 that includes the body portion 42, the first projecting portion 36B, the first projecting portion 38B, the second projecting portion 36C, and the second projecting portion 38C. Specifically, the body portion 42 is provided inside the rocker 22, and the first projecting portion 36B, the first projecting portion 38B, the second projecting portion 36C, and the second projecting portion 38C project in the vehicle up-down direction from the body portion 42 and are joined to the wall surfaces of the rocker 22 positioned at the projecting direction sides of the first projecting portion 36B, the first projecting portion 38B, the second projecting portion 36C, and the second projecting portion 38C.

For this reason, when loads in the vehicle up-down direction are input to the rocker 22 while the vehicle 10 is moving for example and the cross-section of the rocker 22 tries to deform so as to expand and contract in the vehicle up-down direction, the first projecting portion 36B, the first projecting portion 38B, the second projecting portion 36C, the second projecting portion 38C, and the body portion 42 resist the deformation of the rocker 22, with the result that the rocker 22 is less likely to be deformed by the loads. That is, in the present embodiment, the rigidity of the rocker 22 with respect to loads in the vehicle up-down direction can be improved by the reinforcement 34.

Furthermore, in the present embodiment, the inside of the body portion 42 is divided in the vehicle width direction and the body portion 42 functions as an impact absorber, and in the body portion 42 plural spaces are formed in the vehicle width direction. For this reason, when an impact load in the vehicle width direction is input, the parts of the body portion 42 around the spaces become crushed and can thereby absorb the impact energy.

Furthermore, the first projecting portion 36B and the first projecting portion 38B project in the upward direction from the body portion 42 and are joined to the vehicle upper part of the rocker 22, and the second projecting portion 36C and the second projecting portion 38C project in the downward direction from the body portion 42 and are joined to the vehicle lower part of the rocker 22. For this reason, the rigidity of the rocker 22 with respect to loads in the vehicle up-down direction can be further improved.

Furthermore, the first projecting portion 36B and the second projecting portion 36C are disposed as a set in the vehicle up-down direction, and the first projecting portion 38B and the second projecting portion 38C are disposed as a set in the vehicle up-down direction. Additionally, these sets are disposed on the same sides in the vehicle width direction relative to the vehicle width direction center of the rocker 22.

For this reason, loads received by the first projecting portion 36B from the vehicle upper part of the rocker 22 can be supported by the second projecting portion 36C, and loads received by the second projecting portion 36C from the vehicle lower part of the rocker 22 can be supported by the first projecting portion 36B. Furthermore, loads received by the first projecting portion 38B from the vehicle upper part of the rocker 22 can be supported by the second projecting portion 38C, and loads received by the second projecting portion 38C from the vehicle lower part of the rocker 22 can be supported by the first projecting portion 38B.

As a result, compared for example with a configuration where the projecting portions are not disposed as sets in the vehicle up-down direction, the rigidity of the rocker 22 with respect to loads in the vehicle up-down direction can be improved.

Furthermore, the body portion 42 is joined to the vehicle width direction outer part and the vehicle width direction inner part of the rocker 22, and expansion and contraction of the rocker 22 in the vehicle width direction are restrained by the body portion 42. For this reason, the rigidity of the rocker 22 with respect to loads in the vehicle up-down direction can be further improved.

Furthermore, the reinforcement 34 includes the shared panel 40 provided inside the rocker 22. The shared panel 40 extends in the vehicle up-down direction, and the vehicle upper part and the vehicle lower part of the rocker 22 are interconnected by the shared panel 40. For this reason, expansion and contraction of the rocker 22 in the vehicle up-down direction are restrained by the shared panel 40, with the result that the rigidity of the rocker 22 with respect to loads in the vehicle up-down direction can be further improved.

Furthermore, the first projecting portion 36B and the first projecting portion 38B are formed integrally with the vehicle upper part of the body portion 42, and the second projecting portion 36C and the second projecting portion 38C are formed integrally with the vehicle lower part of the body portion 42. For this reason, the number of parts configuring the vehicle 10 can be reduced and the manufacturing process of the vehicle 10 can be simplified.

Furthermore, the base portion 36A, the first projecting portion 36B, and the second projecting portion 36C that configure a part of the body portion 42 can be integrally formed by bending a sheet material. Likewise, the base portion 38A, the first projecting portion 38B, and the second projecting portion 38C that configure a part of the body portion 42 can be integrally formed by bending a sheet material. As a result, the manufacturing process of the vehicle 10 can be further simplified.

In addition, the upper surface 36B1 of the first projecting portion 36B joined to the rocker 22 and the part of the rocker 22 joined to the upper surface 36B1 are in parallel as viewed in the vehicle front-rear direction, and the first projecting portion 36B and the rocker 22 can be brought into planar contact with each other. The same is also true of the lower surface 36C1 of the second projecting portion 36C, the upper surface 38B1 of the first projecting portion 38B, and the lower surface 38C1 of the second projecting portion 38C.

For this reason, when loads in the vehicle up-down direction are input, portions where stress concentrates can be inhibited from forming in the places where the rocker 22 contacts the first projecting portion 36B, the second projecting portion 36C, the first projecting portion 38B, and the second projecting portion 38C, and the rigidity of the rocker 22 with respect to loads in the vehicle up-down direction can be further improved.

In this way, in the present embodiment, the ride quality of the vehicle 10 can be improved and an impact load in the vehicle width direction can be absorbed.

### <Second Embodiment>

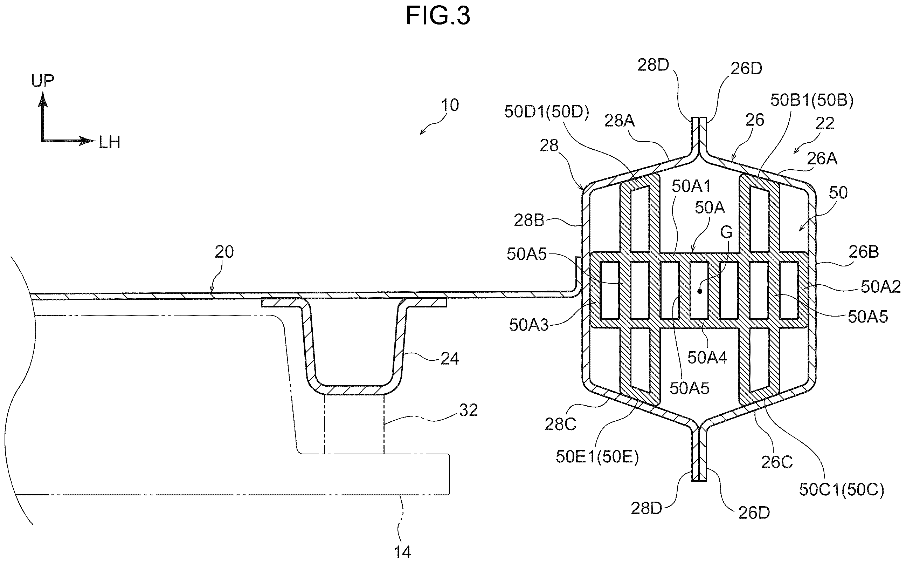

A second embodiment of the vehicle lower body structure pertaining to the present disclosure will be described below using FIG. 3. It will be noted that components identical to those of the first embodiment described above are assigned identical numbers and description thereof will be omitted.

In the vehicle lower body structure pertaining to the present embodiment, a reinforcement 50 provided inside the rocker 22 is an extrusion-molded part of aluminum alloy.

Specifically, the reinforcement 50 includes a body portion 50A that configures the main part thereof and a first projecting portion 50B, a second projecting portion 50C, a first projecting portion 50D, and a second projecting portion 50E configuring projecting portions.

The body portion 50A is configured in the shape of a rectangular cuboid extending in the vehicle front-rear direction and includes an upper wall 50A1 that configures the vehicle upper part thereof, a side wall 50A2 that configures the vehicle width direction outer part thereof, a side wall 50A3 that configures the vehicle width direction inner part thereof, and a lower wall 50A4 that configures the vehicle lower part thereof.

The upper wall 50A1 and the lower wall 50A4 are interconnected by plural partition walls 50A5 that are lined up in the vehicle width direction and whose thickness direction coincides with the vehicle width direction, whereby the inside of the body portion 50A is divided in the vehicle width direction. That is, in the body portion 50A plural spaces extending in the vehicle front-rear direction are formed. These spaces serve as crushing margins of the body portion 50A when an impact load in the vehicle width direction is input, and the body portion 50A functions as an impact absorber.

It will be noted that the side wall 50A2 is joined to the side wall portion 26B of the rocker outer panel 26, and that the side wall 50A3 is joined to the side wall portion 28B of the rocker inner panel 28, by joints (not shown in the drawings) formed by friction stir welding or the like.

The first projecting portion 50B is formed on the vehicle width direction outer part of the upper wall 50A1, extends in the vehicle front-rear direction, projects in the vehicle upward direction from the upper wall 50A1 as viewed in the vehicle front-rear direction, and is configured in the shape of a U that opens in the vehicle downward direction.

Furthermore, an upper surface 50B1 of the first projecting portion 50B is configured as a joint surface joined to the upper wall portion 26A of the rocker outer panel 26 and is in parallel to the upper wall portion 26A as viewed in the vehicle front-rear direction. The upper surface 50B1 of the first projecting portion 50B and the upper wall portion 26A of the rocker outer panel 26 are joined to each other by joints (not shown in the drawings) formed by friction stir welding or the like.

The second projecting portion 50C is formed on the vehicle width direction outer part of the lower wall 50A4, extends in the vehicle front-rear direction, projects in the vehicle downward direction from the lower wall 50A4 as viewed in the vehicle front-rear direction, and is configured in the shape of a U that opens in the vehicle upward direction.

A lower surface 50C1 of the second projecting portion 50C is configured as a joint surface joined to the lower wall portion 26C of the rocker outer panel 26 and is in parallel to the lower wall portion 26C as viewed in the vehicle front-rear direction. The lower surface 50C1 of the second projecting portion 50C and the wall surface of the lower wall portion 26C of the rocker outer panel 26 are joined to each other by joints (not shown in the drawings) formed by friction stir welding or the like.

It will be noted that the first projecting portion 50B and the second projecting portion 50C are disposed as a set so as to overlap each other as viewed in the vehicle up-down direction and are positioned outward in the vehicle width direction relative to the center of gravity G as viewed in the vehicle front-rear direction.

The first projecting portion 50D is formed on the vehicle width direction inner part of the upper wall 50A1, extends in the vehicle front-rear direction, projects in the vehicle upward direction from the upper wall portion 50A1 as viewed in the vehicle front-rear direction, and is configured in the shape of a U that opens in the vehicle downward direction.

An upper surface 50D1 of the first projecting portion 50D is configured as a joint surface joined to the upper wall portion 28A of the rocker inner panel 28 and is in parallel to the upper wall portion 28A as viewed in the vehicle front-rear direction. The upper surface 50D1 of the first projecting portion 50D and the upper wall portion 28A of the rocker inner panel 28 are joined to each other by joints (not shown in the drawings) formed by friction stir welding or the like.

The second projecting portion 50E is formed on the vehicle width direction inner part of the lower wall 50A4, extends in the vehicle front-rear direction, projects in the vehicle downward direction from the lower wall 50A4 as viewed in the vehicle front-rear direction, and is configured in the shape of a U that opens in the vehicle upward direction.

A lower surface 50E1 of the second projecting portion 50E is configured as a joint surface joined to the lower wall portion 28C of the rocker inner panel 28 and is in parallel to the lower wall portion 28C as viewed in the vehicle front-rear direction. The lower surface 50E1 of the second projecting portion 50E and the lower wall portion 28C of the rocker inner panel 28 are joined to each other by joints (not shown in the drawings) formed by friction stir welding or the like.

The first projecting portion 50D and the second projecting portion 50E are disposed as a set so as to overlap each other as viewed in the vehicle up-down direction and are positioned inward in the vehicle width direction relative to the center of gravity G as viewed in the vehicle front-rear direction.

According to this configuration, basically the same action and effects as those of the first embodiment described above can be achieved, excluding action and effects obtained by the reinforcement 34 being configured to include stamped members and by the shared panel 40. Furthermore, in the present embodiment, the reinforcement 50 can be configured by one part, so the number of parts configuring the vehicle 10 can be reduced.

### <Third Embodiment>

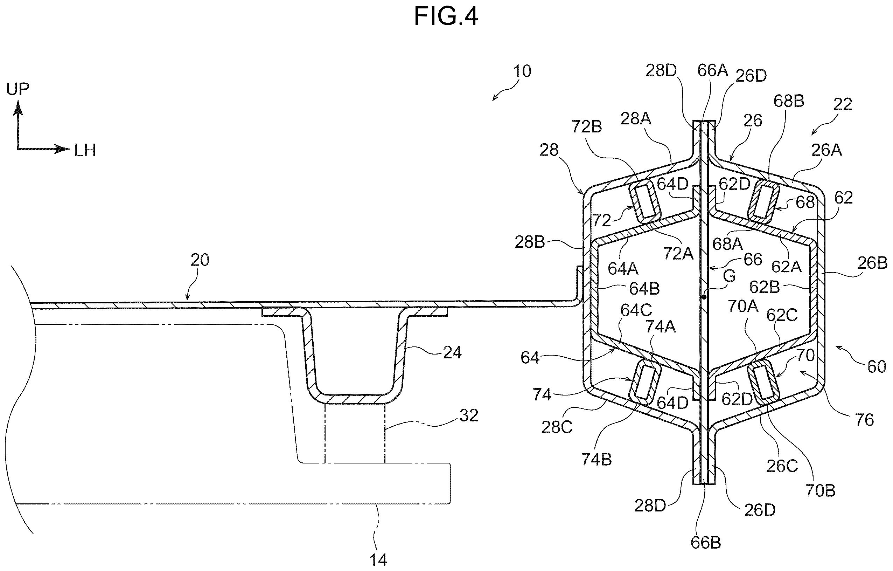

A third embodiment of the vehicle lower body structure pertaining to the present disclosure will be described below using FIG. 4. It will be noted that components identical to those of the first embodiment described above are assigned identical numbers and description thereof will be omitted.

In the vehicle lower body structure pertaining to the present embodiment, a reinforcement 60 is configured to include an outer reinforcement member 62 made of steel, an inner reinforcement member 64 made of steel, a shared panel 66 made of steel, and a first projecting portion 68, a second projecting portion 70, a first projecting portion 72, and a second projecting portion 74 configuring projecting portions that are extrusion-molded parts of aluminum alloy.

The outer reinforcement member 62 is formed by stamping a single steel sheet and extends in the vehicle front-rear direction. The outer reinforcement member 62 includes an upper wall 62A that configures the vehicle upper part thereof, a side wall 62B that configures the vehicle width direction outer part thereof, a lower wall 62C that configures the vehicle lower part thereof, and a pair of flanges 62D. Namely, the cross-sectional shape of the outer reinforcement member 62 as viewed in the vehicle front-rear direction is configured in the shape of a hat that opens inward in the vehicle width direction. The side wall 62B is joined to the side wall portion 26B of the rocker outer panel 26 by joints (not shown in the drawings) formed by welding or the like.

The inner reinforcement member 64 is formed by stamping a single steel sheet and extends in the vehicle front-rear direction. The inner reinforcement member 64 includes an upper wall 64A that configures the vehicle upper part thereof, a side wall 64B that configures the vehicle width direction inner part thereof, a lower wall 64C that configures the vehicle lower part thereof, and a pair of flanges 64D. Namely, the cross-sectional shape of the outer reinforcement member 64 as viewed in the vehicle front-rear direction is configured in the shape of a hat that opens outward in the vehicle width direction. The side wall 64B is joined to the side wall portion 28B of the rocker inner panel 28 by joints (not shown in the drawings) formed by welding or the like.

The shared panel 66 has the same configuration as the shared panel 40, and an upper end portion 66A thereof is sandwiched between and joined by joints (not shown in the drawings) formed by welding or the like to the rocker outer panel 26 and the rocker inner panel 28.

The part of the shared panel 66 directly under the upper end portion 66A is sandwiched between and joined by joints (not shown in the drawings) formed by welding or the like to the flange 62D on the vehicle upper side of the outer reinforcement member 62 and the flange 64D on the vehicle upper side of the inner reinforcement member 64.

A lower end portion 66B of the shared panel 66 is, like that of the shared panel 40, sandwiched between and joined by joints (not shown in the drawings) formed by welding or the like to the rocker outer panel 26 and the rocker inner panel 28.

The part of the shared panel 66 directly above the lower end portion 66B is sandwiched between and joined by joints (not shown in the drawings) formed by welding or the like to the flange 62D on the vehicle lower side of the outer reinforcement member 62 and the flange 64D on the vehicle lower side of the inner reinforcement member 64.

Hereinafter the aggregate of the outer reinforcement member 62, the inner reinforcement member 64, and the shared panel 66 will be called a body portion 76. The inside of the body portion 76 is divided in the vehicle width direction, whereby plural spaces extending in the vehicle front-rear direction are formed therein. These spaces serve as crushing margins of the outer reinforcement member 62 and the inner reinforcement member 64 when an impact load in the vehicle width direction is input, and the body portion 76 functions as an impact absorber.

The first projecting portion 68 is formed in the shape of a rectangular tube extending in the vehicle front-rear direction and is disposed on the vehicle width direction central portion of the upper wall 62A, and a lower surface 68A thereof is joined to the upper wall 62A by joints (not shown in the drawings) formed by friction stir welding or the like.

An upper surface 68B of the first projecting portion 68 is configured as a joint surface joined to the upper wall portion 26A of the rocker outer panel 26 and is in parallel to the upper wall portion 26A as viewed in the vehicle front-rear direction. The upper surface 68B of the first projecting portion 68 and the wall surface of the upper wall portion 26A of the rocker outer panel 26 are joined to each other by joints (not shown in the drawings) formed by friction stir welding or the like.

The second projecting portion 70 is formed in the shape of a rectangular tube extending in the vehicle front-rear direction and is disposed on the vehicle width direction central portion of the lower wall 62C, and an upper surface 70A thereof is joined to the lower wall 62C by joints (not shown in the drawings) formed by friction stir welding or the like.

A lower surface 70B of the second projecting portion 70 is configured as a joint surface joined to the lower wall portion 26C of the rocker outer panel 26 and is in parallel to the lower wall portion 26C as viewed in the vehicle front-rear direction. The lower surface 70B of the second projecting portion 70 and the wall surface of the lower wall portion 26C of the rocker outer panel 26 are joined to each other by joints (not shown in the drawings) formed by friction stir welding or the like.

It will be noted that the first projecting portion 68 and the second projecting portion 70 are disposed as a set so as to overlap each other as viewed in the vehicle up-down direction and are positioned outward in the vehicle width direction relative to the center of gravity G as viewed in the vehicle front-rear direction.

The first projecting portion 72 is formed in the shape of a rectangular tube extending in the vehicle front-rear direction and is disposed on the vehicle width direction central portion of the upper wall 64A, and a lower surface 72A thereof is joined to the upper wall 64A by joints (not shown in the drawings) formed by friction stir welding or the like.

An upper surface 72B of the first projecting portion 72 is configured as a joint surface joined to the upper wall portion 28A of the rocker inner panel 28 and is in parallel to the upper wall portion 28A as viewed in the vehicle front-rear direction. The upper surface 72B of the first projecting portion 72 and the wall surface of the upper wall portion 28A of the rocker inner panel 28 are joined to each other by joints (not shown in the drawings) formed by friction stir welding or the like.

The second projecting portion 74 is formed in the shape of a rectangular tube extending in the vehicle front-rear direction and is disposed on the vehicle width direction central portion of the lower wall 64C, and an upper surface 74A thereof is joined to the lower wall 64C by joints (not shown in the drawings) formed by friction stir welding or the like.

A lower surface 74B of the second projecting portion 74 is configured as a joint surface joined to the lower wall portion 28C of the rocker inner panel 28 and is in parallel to the lower wall portion 28C as viewed in the vehicle front-rear direction. The lower surface 74B of the second projecting portion 74 and the wall surface of the lower wall portion 28C of the rocker inner panel 28 are joined to each other by joints (not shown in the drawings) formed by friction stir welding or the like.

It will be noted that the first projecting portion 72 and the second projecting portion 74 are disposed as a set so as to overlap each other as viewed in the vehicle up-down direction and are positioned inward in the vehicle width direction relative to the center of gravity G as viewed from the vehicle front-rear direction.

According to this configuration, basically the same action and effects as those of the first embodiment described above can be achieved, excluding action and effects obtained by the plural projecting portions being parts of stamped members.

Furthermore, in the present embodiment, the outer reinforcement member 62, the inner reinforcement member 64, the first projecting portion 68, the second projecting portion 70, the first projecting portion 72, and the second projecting portion 74 are all separate parts, so the shapes of the parts configuring the reinforcement 60 can be simplified.

### <Supplemental Description of Above Embodiments>

(1) In the first embodiment described above, the outer reinforcement member 36 and the inner reinforcement member 38 were each provided with plural projecting portions but depending for example on the specifications of the vehicle 10 a configuration where the outer reinforcement member 36 and the inner reinforcement member 38 are each provided with one projecting portion may also be employed.
(2) Furthermore, in the first embodiment described above, the reinforcement 34 included the outer reinforcement member 36 and the inner reinforcement member 38 but depending for example on the specifications of the vehicle 10 a configuration where the reinforcement 34 includes either one of the outer reinforcement member 36 and the inner reinforcement member 38 may also be employed.
(3) Moreover, in the second embodiment described above, the inside of the reinforcement 50 was divided but depending for example on the specifications of the vehicle 10 a configuration where the reinforcement 50 is formed in a shape including only the outer peripheral portion thereof may also be employed.

## Claims

1. A vehicle lower body structure, comprising:
a rocker (22) configuring a part of a vehicle lower side of a vehicle side portion (10A), the rocker (22) disposed along a vehicle front-rear direction; and
a reinforcement (34, 50, 60) including a body portion (42, 50A, 76) provided inside the rocker (22) and a projecting portion (36B, 36C, 38B, 38C; 50B, 50C, 50D, 50E; 68, 70, 72, 74) that projects in a vehicle up-down direction from the body portion (42, 50A, 76) and that is joined to a wall surface of the rocker (22) positioned on a projecting direction side of the projecting portion (36B, 36C, 38B, 38C; 50B, 50C, 50D, 50E; 68, 70, 72, 74) .

2. The vehicle lower body structure of claim 1, wherein:
the body portion (42, 50A, 76) is configured such that an inside of the body portion (42, 50A, 76) is an impact absorber that is divided in a vehicle width direction,
a first projecting portion (36B, 38B; 50B, 50D; 68, 72) configuring the projecting portion projects in a vehicle upward direction from the impact absorber, and the first projecting portion (36B, 38B; 50B, 50D; 68, 72) is joined to a vehicle upper part of the rocker (22), and
a second projecting portion (36C, 38C; 50C, 50E; 70, 74) configuring the projecting portion projects in a vehicle downward direction from the impact absorber, and the second projecting portion (36C, 38C; 50C, 50E; 70, 74) is joined to a vehicle lower part of the rocker (22).

3. The vehicle lower body structure of claim 2, wherein:
the first projecting portion (36B, 38B; 50B, 50D; 68, 72) and the second projecting portion (36C, 38C; 50C, 50E; 70, 74) are disposed as a set (36B and 36C, 38B and 38C, 50B and 50C, 50D and 50E, 68 and 70, 72 and 74) as viewed in the vehicle up-down direction, and
the first projecting portion and the second projecting portion (36B and 36C, 38B and 38C, 50B and 50C, 50D and 50E, 68 and 70, 72 and 74) are disposed on a same side in the vehicle width direction relative to a vehicle width direction center position of the rocker (22).

4. The vehicle lower body structure according to any one of claims 1 to 3, wherein the body portion (42, 50A, 76) is joined to an outer part and an inner part, in the vehicle width direction, of the rocker (22).

5. The vehicle lower body structure according to any one of claims 1 to 4, wherein the reinforcement (34, 60) further includes a shared panel (40, 66) that is provided inside the rocker (22), that extends in the vehicle up-down direction, and that interconnects a vehicle upper part and a vehicle lower part of the rocker (22).

6. The vehicle lower body structure according to any one of claims 1 to 5, wherein the projecting portion (36B, 36C, 38B, 38C; 50B, 50C, 50D, 50E) is formed integrally with at least one of a vehicle upper part or a vehicle lower part of the body portion (42, 50A).

7. The vehicle lower body structure of claim 6, wherein the projecting portion (36B, 36C, 38B, 38C) and a part of the body portion (42) at which the projecting portion is provided are formed by the same sheet material.

8. The vehicle lower body structure according to any one of claims 1 to 7, wherein a joint surface (36B1, 36C1, 38B1, 38C1; 50B1, 50C1, 50D1, 50E1; 68B, 70B, 72B, 74B) of the projecting portion (36B, 36C, 38B, 38C; 50B, 50C, 50D, 50E; 68, 70, 72, 74) joined to the rocker (22) and a part of the rocker (22) joined to the joint surface (36B1, 36C1, 38B1, 38C1; 50B1, 50C1, 50D1, 50E1; 68B, 70B, 72B, 74B) are in parallel as viewed in the vehicle front-rear direction.
